**Europäisches Patentamt**

**European Patent Office**

**Office européen des brevets**

(19)

(11) Numéro de publication : **0 187 067**
**B1**

(12)    **FASCICULE DE BREVET EUROPÉEN**

(45) Date de publication du fascicule du brevet :
02.11.89

(51) Int. Cl.⁴ : **H 04 L    1/22**

(21) Numéro de dépôt : **85402304.1**

(22) Date de dépôt : **26.11.85**

(54) Système de commutation pour réseau de transmission numérique.

(30) Priorité : 30.11.84 FR 8418265

(43) Date de publication de la demande :
09.07.86 Bulletin 86/28

(45) Mention de la délivrance du brevet :
02.11.89 Bulletin 89/44

(84) Etats contractants désignés :
DE GB IT NL

(56) Documents cités :
FR–A– 2 359 553
US–A– 4 234 956
US–A– 4 477 895

(73) Titulaire : **SAT Société Anonyme de Télécommunications**
**41, rue Cantagrel**
**F-75631 Paris Cedex 13 (FR)**

(72) Inventeur : **Force, Claude Jean**
**35, avenue des Acacias**
**F-91800 Brunoy (Essonne) (FR)**
Inventeur : **Loisel, Claude Christian**
**3, rue Victor Hugo**
**F-92120 Montrouge (Haute de Seine) (FR)**

(74) Mandataire : **Bloch, Robert et al**
**2, square de l'Avenue du Bois**
**F-75116 Paris (FR)**

EP 0 187 067 B1

Jouve, 18, rue St-Denis, 75001 Paris, France

## Description

La présente invention concerne un système de commutation selon le préambule de la revendication 1.

Un tel système est utilisé, par exemple, dans les transmissions numériques par faisceaux hertziens, où par suite de conditions de propagation défavorables, ou de panne d'un matériel, un canal de transmission se trouve à secourir. Compte-tenu du taux d'apparition de ce genre de difficulté, et de façon à ce que le coût du système reste raisonnable, un seul canal de secours est prévu pour plusieurs canaux normaux. Il est donc nécessaire de prévoir un système de commutation permettant de remplacer n'importe quel canal normal par le canal de secours. De plus, il est préférable d'effectuer cette commutation après s'être assuré que ces deux canaux ont le même temps de propagation total, afin que l'utilisateur ne s'aperçoive pas de la commutation, ce qui serait inévitablement le cas si on effectuait celle-ci sans précautions particulières.

On connaît déjà de tels systèmes, décrits par exemple dans les brevets US 4 477 895 et US 4 234 956. Cependant, ces systèmes sont prévus pour fonctionner avec des signaux numériques binaires et ne peuvent traiter les signaux numériques bipolaires, par exemple du type codé selon le code à haute densité bipolaire d'ordre 3 (HDB 3). Or ce type de code est très bien adapté à la transmission des signaux numériques en bande de base sur les grandes longueurs de câbles rencontrés dans les stations d'émission et de réception.

En effet un code HDBn correspond à un signal à trois niveaux $+1, 0$ et $-1$, qui n'a pas de composante continue, et le codage est prévu pour qu'on ne rencontre jamais plus de n zéros consécutifs.

Il est donc intéressant de disposer d'un système de commutation prévu pour fonctionner avec des signaux bipolaires.

On connaît déjà un tel système de commutation, décrit dans la demande FR 2 359 553. Ce système comprend, à l'émission, des moyens pour appliquer à l'entrée d'un canal de secours un signal bipolaire appliqué à l'entrée d'un canal normal et, à la réception, des moyens agencés pour recevoir des signaux bipolaires et pour commander des moyens de commutation, agencés pour recevoir des signaux bipolaires, du canal normal sur le canal de secours. Toutefois, il n'est pas prévu de moyens sensibles au décalage temporel, ni de moyens de compensation de ce décalage temporel. Ce système n'est donc pas prévu pour éviter les discontinuités dans le signal reçu par l'utilisateur, qui se produisent au moment de la commutation du canal normal sur le canal de secours, lorsque ces deux canaux ont des temps de propagation différents.

On connaît également un autre système de commutation, dans lequel le signal d'entrée desdits moyens d'application, du côté émission, ainsi que le signal de sortie desdits moyens de commutation, du côté réception, sont des signaux numériques bipolaires HDB3, et qui est prévu pour une commutation sans discontinuité dans le cas où le canal normal et le canal de secours ont des temps de propagation différents.

Dans ce système, lesdits moyens d'application, du côté émission, comprennent une jonction, possédant donc une entrée HDB3 suivie par un circuit de traitement du signal HDB3, comprenant un amplificateur à contrôle automatique de gain, un circuit de récupération d'horloge, et un circuit d'aiguillage des impulsions positives et négatives. Ce circuit de traitement, ou transcodeur HDB3/binaire + horloge, délivre d'une part le signal d'horloge et d'autre part deux signaux binaires, c'est-à-dire à deux niveaux 0 et 1, appelés respectivement :

— signal HDB$^+$ (suite des impulsions positives du signal HDB3),

— signal HDB$^-$ (suite des impulsions négatives du signal HDB3 redressées).

Le transcodeur HDB3/binaire + horloge est suivi d'un autre circuit de traitement qui transforme les deux signaux HDB$^+$ et HDB$^-$ en un seul signal binaire, qui, accompagné du signal d'horloge, est traité par des circuits logiques conventionnels, pour engendrer les deux signaux binaires de sortie de la jonction, dont l'un est appliqué à l'entrée du canal normal et dont l'autre peut être appliqué à l'entrée du canal de secours si le canal normal doit être secouru.

De manière analogue, les deux signaux binaires reçus sur le canal à secourir et sur le canal de secours sont appliqués aux entrées binaires des moyens sensibles au décalage temporel et des moyens de compensation du décalage temporel. Grâce à des circuits logiques conventionnels, ils sont comparés et retardés l'un par rapport à l'autre pour compenser leur décalage temporel. Lorsque cette compensation est réalisée, le signal binaire du canal de secours, à l'aide de portes logiques, est envoyé à la place du signal binaire du canal à secourir, à travers un transcodeur, qui le transforme en un signal en code HDB3, sur un câble de sortie.

Ainsi, dans ce système connu, la jonction possède une entrée HDB3 et deux sorties binaires, alors que les moyens de réception possèdent deux entrées binaires et une sortie HDB3.

Cela limite l'emploi du système connu aux réseaux à transmission d'informations binaires.

De plus, comme les signaux binaires se propagent mal sur les grandes longueurs de câbles, il faut placer la jonction très près de l'émetteur et le circuit de commutation très près du récepteur.

Mais il en résulte deux inconvénients.

D'une part la longueur de canal susceptible d'être doublée par le canal de secours se trouve réduite, ainsi que le nombre d'éléments qu'elle englobe, et les risques de panne définitive sur un canal sont augmentés.

D'autre part, la jonction et le circuit de commutation doivent être matériellement localisés sur les tours de la station hertzienne, par exemple.

La présente invention pallie ces inconvénients.

L'invention a donc pour objet, à cet effet, un système de commutation du type mentionné ci-dessus, tel que défini par la partie caractérisante de la revendication 1. Grâce à l'invention, et s'agissant de signaux bipolaires, tous les moyens de commutation du système de l'invention, aussi bien du côté émission que du côté réception peuvent être éloignés de l'émetteur et du récepteur, respectivement. Ce résultat est obtenu en particulier parce que la demanderesse a eu l'idée d'utiliser, et a mis au point, des moyens sensibles au décalage temporel recevant des signaux bipolaires.

Dans la forme de réalisation préférée du système de l'invention, lesdits moyens d'application de signal, du côté émission, lesdits moyens sensibles et lesdits moyens de compensation du côté réception, comprennent, chacun, à chaque entrée des moyens pour transformer un signal bipolaire en deux signaux binaires et un signal d'horloge, et lesdits moyens d'application de signal, du côté émission, lesdits moyens de compensation et lesdits moyens de commutation, du côté réception, comprennent, chacun, à chaque sortie des moyens pour transformer les deux dits signaux binaires et ledit signal d'horloge en un signal bipolaire.

Avantageusement, lesdits moyens sensibles, du côté réception, comportent des moyens d'addition logique des deux signaux binaires du canal normal, des moyens d'addition logique des deux signaux binaires du canal de secours, des moyens pour détecter la coïncidence des deux signaux d'addition, des moyens sensibles au déphasage entre l'un des deux signaux binaires du canal normal et chaque signal binaire du canal de secours, lesdits moyens de détection de coïncidence et lesdits moyens sensibles au déphasage commandant lesdits moyens de commutation, du côté réception.

L'invention sera mieux comprise grâce à la description suivante de la forme de réalisation préférée du système de commutation selon l'invention, faite en se référant aux dessins joints, sur lesquels :

— la figure 1 représente un schéma par blocs de l'ensemble du système ;

— la figure 2 représente un schéma détaillé de la jonction d'émission 11 du système de la figure 1 ;

— la figure 3 représente un schéma détaillé du circuit d'aiguillage 9 du système de la figure 1 ;

— la figure 4 représente un schéma détaillé du circuit de compensation du temps de décalage 10 du système de la figure 1 ;

— la figure 5 représente un schéma détaillé du circuit de réception 12 du système de la figure 1, et

— la figure 6 représente un schéma détaillé du circuit de corrélation 150 du circuit de la figure 5.

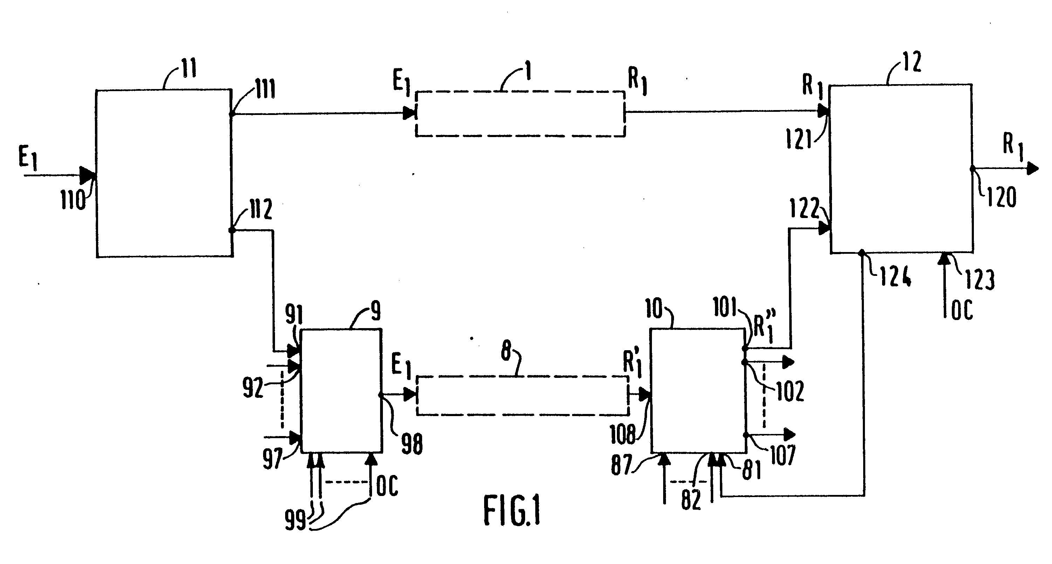

Sur la figure 1, est représenté un premier canal normal 1 d'un réseau, ici de sept canaux normaux de transmission numérique, les six autres canaux, de conception identique à celle du canal 1 n'étant pas représentés pour des raisons de simplicité. Le canal normal 1, recevant un signal d'émission et transmettant un signal de réception codés en code HDB3, peut être secouru, comme les six autres canaux normaux, par un unique canal de secours 8.

Le système de l'invention comprend, du côté émission, sept jonctions d'émission, dont seule la première jonction d'émission 11 est représentée, et un aiguillage unique 9, et du côté réception, un unique circuit de compensation de décalage temporel 10 et sept circuits de réception dont seul le premier circuit de réception 12 est représenté.

La jonction d'émission 11 possède une entrée acceptant des signaux bipolaires codés en code HDB3, désignée pour simplifier par « entrée HDB3 » 110 et deux sorties HDB3 111 et 112. La sortie HDB3 111 est reliée à l'entrée du canal normal 1, et la sortie HDB3 112 est reliée à la première de sept entrées HDB3 91 à 97 de l'aiguillage 9 dont la sortie HDB3 98 est reliée à l'entrée du canal de secours 8. L'aiguillage 9 possède également sept entrées d'ordre de commutation 99.

La sortie du canal normal 1 est reliée à une entrée HDB3 121 du circuit de réception 12. La sortie du canal de secours 8 est reliée à une entrée HDB3 108 du circuit de compensation de décalage temporel 10. La première de sept sorties HDB3 101 à 107 du circuit de compensation de décalage temporel est reliée à une entrée HDB3 122 du circuit de réception 12. Le circuit de réception 12 possède également une sortie HDB3 120, une entrée d'ordre de commutation 123, et une sortie de commande de décalage 124, reliée à la première de sept entrées de commande 81 à 87 du circuit de compensation de décalage temporel 10.

Avant de décrire de façon détaillée chacun des circuits 9, 10, 11 et 12, décrivons le fonctionnement de l'ensemble représenté sur la figure 1.

Le signal $E_1$, codé en code HDB3, à émettre sur le canal normal 1, signal éventuellement dégradé par une propagation dans une longueur de câble importante, est appliqué à l'entrée HDB3 110 de la jonction 11, où il est remis en forme et recopié sur les deux sorties HDB3 111 et 112. En fonctionnement normal, le signal $E_1$ est émis sur le canal normal 1, et le signal reçu $R_1$ correspondant est appliqué à l'entrée HDB3 121 du circuit de réception 12, où il est remis en forme et recopié sur la sortie HDB3 120.

Lorsqu'une anomalie est constatée, de façon connue, sur le signal $R_1$ en aval de la sortie HDB3 120, une demande de commutation est émise, qui a pour conséquence la production d'un ordre de commutation destiné à initialiser la procédure de remplacement du canal normal 1 par le canal de secours 8. Le dispositif de demande de commutation, de type connu, ainsi que les organes généraux connus, qui produisent l'ordre de commutation ne sont pas représentés sur la figure 1 pour des raisons de simplicité.

En réponse au signal d'ordre de commutation OC appliqué sur la première entrée 99 de l'aiguillage 9, la borne d'entrée HDB3 91 est reliée à la borne de sortie HDB3 98 et le signal $E_1$ est appliqué à l'entrée du canal de secours 8. Le signal reçu $R_1'$, sur le canal de secours 8, qui peut différer du signal $R_1$, notamment par un décalage temporel, compte tenu de ce que les temps de propagation diffèrent d'un canal à l'autre, est appliqué à l'entrée HDB3 108 du circuit de compensation de décalage temporel, où il est remis en forme et décalé en temps pour donner un signal $R_1''$ recopié sur les sorties HDB3 101 à 107 du circuit de compensation de décalage temporel 10.

Le signal $R_1''$ est donc appliqué à l'entrée HDB3 122 du circuit de réception 12, où il est comparé avec le signal $R_1$ appliqué à l'entrée HDB3 121. Si le signal $R_1$ n'est pas en phase avec le signal $R_1''$, le circuit de réception émet, si un ordre de commutation est appliqué à son entrée 123, un signal de commande de décalage sur la sortie 124 qui commande au circuit de compensation de décalage temporel 10 un décalage incrémental déterminé. Cette procédure recommence jusqu'à ce que les signaux $R_1'$ et $R_1''$, soient en phase, auquel cas le circuit de réception 12 envoie sur la sortie HDB3 120 le signal $R_1''$ appliqué à l'entrée HDB3 122. Le remplacement du canal normal 1 par le canal de secours 8 s'est effectué sans que le signal de la sortie HDB3 120 ne subisse de discontinuité, donc sans que l'utilisateur du canal 1 ne s'en soit aperçu. Le canal normal 1 est libre pour permettre un diagnostic et une remise en état.

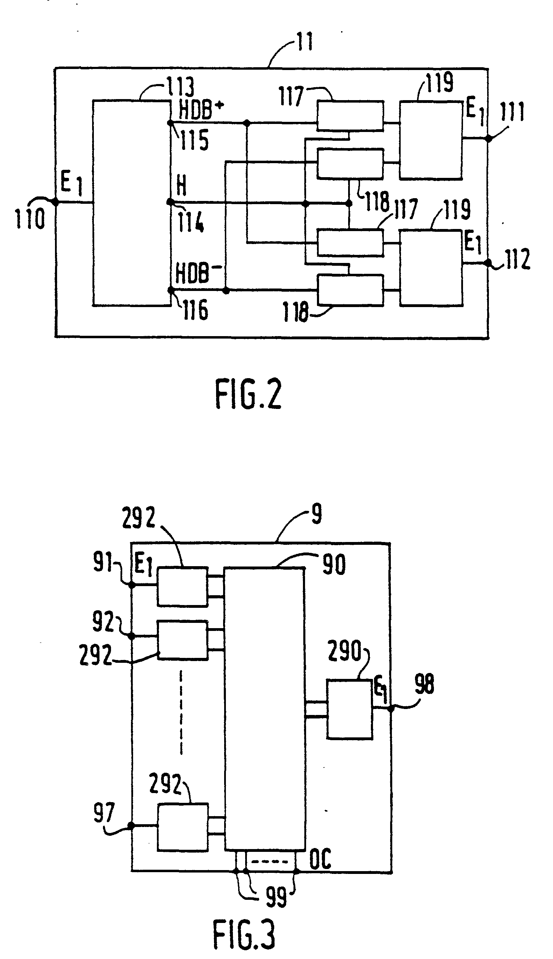

En se référant maintenant à la figure 2, la jonction d'émission 11 comprend un circuit de traitement 113 possédant une entrée HDB3 110, une sortie binaire d'horloge 114, une sortie binaire 115 dite sortie HDB+ et une sortie binaire 116 dite sortie HDB−. Le circuit de traitement 113, ou transcodeur HDB3/binaire + horloge, est identique à celui utilisé dans les systèmes connus, par exemple dans le système décrit dans la demande française 2 359 553 décrit plus haut. La sortie binaire d'horloge 114 est reliée aux entrées d'horloge de quatre circuits logiques de mise en forme 117, 118. La sortie binaire HDB+ 115 est reliée aux deux circuits de mise en forme 117 et la sortie binaire HDB− 116 est reliée aux deux autres circuits de mise en forme 118.

Les deux sorties de chaque couple de circuits de mise en forme 117, 118 sont reliées aux deux entrées de deux circuits de sortie 119, respectivement. Chaque circuit de sortie 119 est un transcodeur binaire/HDB3 de type connu qui donne en sortie un signal HDB3 à partir des deux signaux binaires HDB+ et HDB−. Les sorties HDB3 des deux circuits de sortie 119 sont reliées aux sorties HDB3 111 et 112 de la jonction d'émission 11.

La jonction d'émission 11 qui vient d'être décrite fonctionne de la manière suivante. Le signal bipolaire HDB3 $E_1$ est appliqué à l'entrée du circuit de traitement 113, qui délivre trois signaux binaires, à savoir le signal d'horloge H et les deux signaux HDB+ et HDB−. Ces deux derniers signaux peuvent être appliqués simultanément à deux chaînes indépendantes, où ils sont remis en forme par des circuits logiques conventionnels 117, 118 puis recombinés par les circuits de sortie 119 en deux signaux HDB3 identiques à $E_1$ sur les sorties HDB3 111 et 112.

En se référant maintenant à la figure 3, le circuit d'aiguillage 9 comprend, entre les sept entrées HDB3 91 à 97 et la sortie HDB3 98, des transcodeurs HDB3/binaire 292 de type connu, comparables au transcodeur HDB3/binaire + horloge 113 déjà rencontré, agencés pour séparer chaque signal d'entrée HDB3 en deux signaux HDB+ et HDB−, un multiplexeur 90 de type connu pour sélectionner l'une des sept paires de signaux HDB+ et HDB−, commandé par les ordres de commutation OC appliqués aux entrées 99 et un transcodeur binaire/HDB3 290 identique au transcodeur binaire/HDB3 119 pour réformer un signal HDB3 à partir des signaux HDB+ et HDB− sélectionnés.

L'aiguillage 9 permet donc, en réponse à un ordre de commutation codé OC, de réunir une quelconque entrée 91 à 97 à la sortie 98.

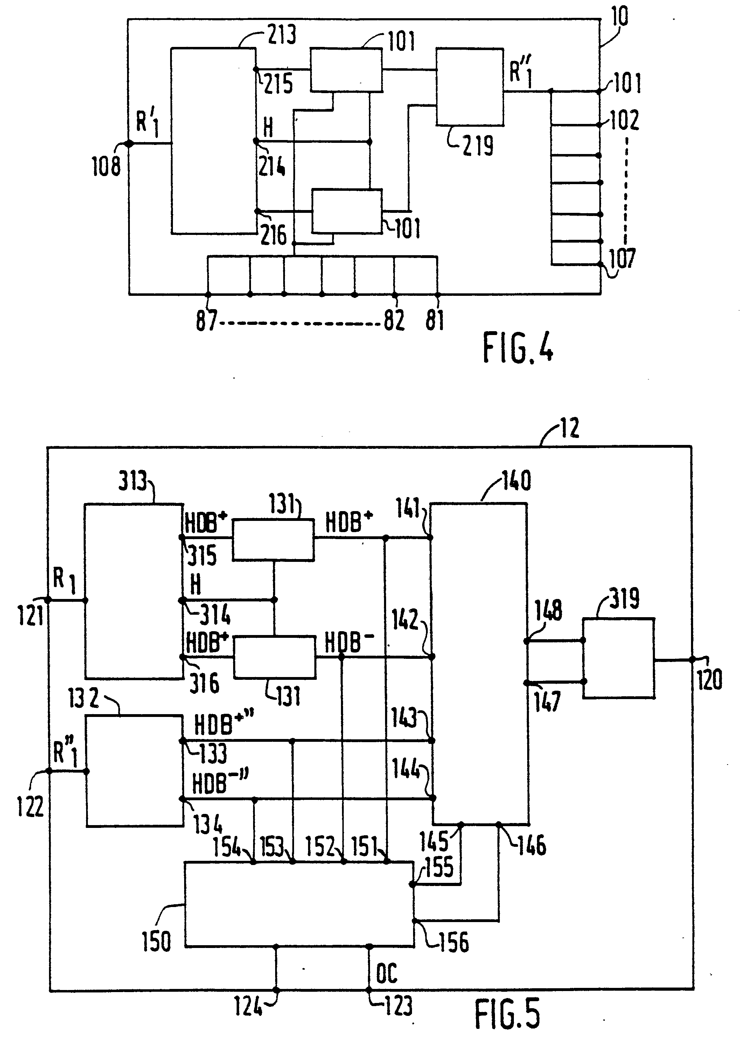

En se référant maintenant à la figure 4, le circuit de compensation de décalage temporel 10 comprend un transcodeur HDB3/binaire + horloge 213 identique à celui 113 de la jonction d'émission 11. La sortie binaire d'horloge 214 du transcodeur 213 est reliée aux entrées d'horloge de deux circuits à retard incrémental variable 101, de type connu, les sorties binaires HDB+ 215 et HDB− 216 sont reliées aux entrées de signal des deux circuits à retard incrémental variable 101, respectivement, dont les sorties binaires sont reliées aux entrées d'un transcodeur binaire/HDB3 219 du type déjà rencontré. La sortie HDB3 du transcodeur 219 est reliée aux sept sorties 101 à 107 du circuit de compensation de décalage temporel 10, dont les sept entrées de commande 81 à 87 sont reliées entre elles et reliées aux entrées de commande de variation du retard de chacun des circuits à retard incrémental variable 101.

Le circuit de compensation de décalage temporel 10 fonctionne de la manière suivante. Le signal HDB3 $R_1'$, appliqué à l'entrée du transcodeur 213, est transformé en un signal d'horloge H et deux signaux HDB+ et HDB− qui sont retardés de manière identique par des circuits à retard incrémental variable 101. Les signaux retardés HDB+ et HDB− sont recombinés par le transcodeur 219 en un signal HDB3 $R_1''$ sur les sorties HDB3 101 à 107. Le retard incrémental introduit est commandable par le signal appliqué à une des entrées de commande 81 à 87.

En se référant maintenant à la figure 5, l'entrée HDB3 121 du circuit de réception 12 est reliée à l'entrée d'un transcodeur HDB3/binaire + horloge 313 du type déjà rencontré dans la jonction d'émission 11 et dans le circuit de compensation de décalage temporel 10. La sortie binaire d'horloge 314 du transcodeur 313 est reliée aux entrées d'horloge de deux circuits à retard incrémental fixe 131 de type connu. Les sorties binaires HDB⁺ 315 et HDB⁻ 316 du transcodeur 313 sont reliées aux entrées de signal respectives de chaque circuit à retard logique fixe 131, dont les sorties sont reliées à deux entrées binaires 141 et 142 d'un multiplexeur 140 à quatre entrées binaires 141 à 144 et deux sorties binaires 147 et 148. Le multiplexeur 140 est commandé par deux entrées binaires de commande 145 et 146.

L'entrée HDB3 122 est reliée à un transcodeur HDB3/binaire 132, identique au transcodeur 292. Les sorties HDB⁺″ 133 et HDB⁻″ 134 du transcodeur 132 sont reliées à la paire d'entrées binaires 143-144. La paire de sorties binaires 147-148 est reliée à un transcodeur binaire/HDB3 319 dont la sortie est reliée à la sortie HDB3 120. Le transcodeur 319 est du type déjà rencontré.

Les entrées binaires 141 à 144 du multiplexeur 140 sont respectivement reliées à quatre entrées binaires 151 à 154 d'un circuit de corrélation 150, possédant également une sortie de commande de décalage temporel reliée à la sortie 124, deux sorties 155 et 156 respectivement reliées aux entrées de commande 145 et 146, et une entrée d'ordre de commutation réunie à l'entrée 123.

Le circuit de réception 12 qui vient d'être décrit fonctionne comme suit. Le signal HDB3 R₁ appliqué à l'entrée 121 du transcodeur 113 est transformé en un signal d'horloge et deux signaux HDB⁺ et HDB⁻ qui sont retardés de manière identique par les circuits à retard fixe 131, dont le rôle est de compenser une différence trop importante de temps de propagation entre le canal normal 1 et le canal de secours 8, qui ne pourrait être rattrapée par les circuits à retard variable 101. Les signaux de sorties HDB⁺ et HDB⁻, convenablement retardés, sont appliqués au multiplexeur 140.

Le signal HDB3 R₁″ appliqué à l'entrée 122 du transcodeur 132, est transformé en deux signaux HDB⁺″ et HDB⁻″ appliqués au multiplexeur 140.

Le circuit de corrélation 150, qui sera décrit plus loin, sensible au décalage temporel entre les signaux HDB⁺, HDB⁻, HDB⁺″ et HDB⁻″, envoie, si un signal d'ordre de commutation OC est présent à l'entrée 123, un signal de décalage sur la sortie 124. Lorsque le circuit de corrélation 150 détecte l'absence de décalage temporel entre les signaux R₁ et R₁″, il envoie, toujours à condition que le signal d'ordre de commutation OC soit présent à l'entrée 123, deux signaux de commande sur les sorties 155 et 156, afin que le multiplexeur 140 supprime les connections entre la paire d'entrées 141-142 et la paire de sorties 147-148 et réalise les connections entre la paire d'entrées 143-144 et la paire de sorties 147-148 de façon à ce que le signal de la sortie HDB3 120 du transcodeur 319 ne subisse aucune discontinuité.

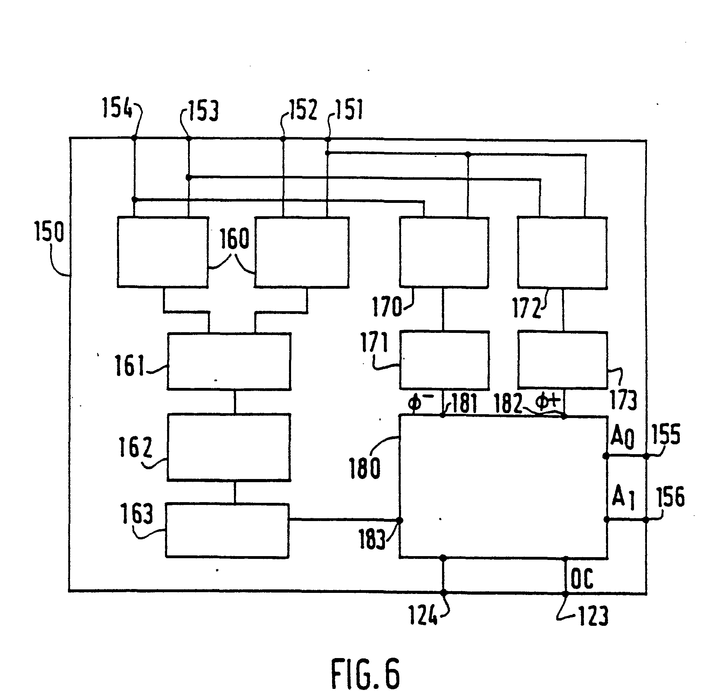

En se référant maintenant à la figure 6, les entrées binaires 151 et 152 d'une part, et les entrées binaires 153 et 154 d'autre part du circuit de corrélation 150, sont respectivement reliées aux entrées de deux circuits OU exclusif 160, dont les sorties sont reliées aux entrées d'un troisième circuit OU exclusif 161. La sortie du circuit OU exclusif est reliée à un compteur 162 commandant un comparateur numérique 163. La sortie du comparateur numérique est reliée à une entrée 183 d'un circuit de traitement 180.

L'entrée binaire 151 est reliée à une entrée d'un modulateur en anneau 172, bien connu, dont l'autre entrée est reliée à l'entrée binaire 153. De même, l'entrée binaire 151 est reliée à une entrée d'un autre modulateur en anneau 170 dont l'autre entrée est reliée à l'entrée binaire 154. Les sorties des modulateurs en anneau 170 et 172 sont respectivement reliées aux entrées de comparateurs analogiques 171 et 173, dont les sorties sont respectivement réunies à deux entrées 181 et 182 du circuit de traitement 180.

Le circuit de traitement 180 possède également une entrée d'ordre de commutation réunie à l'entrée 123, une sortie de commande de décalage temporel reliée à la sortie 124 et deux sorties de commande d'aiguillage reliées aux sorties 155 et 156.

Le fonctionnement du circuit de corrélation sera compris si l'on sait que une des particularités du code HDB3 est que deux signaux véhiculant la même information au même instant, comme par exemple les signaux R₁ et R₁″ lorsque le décalage temporel a été compensé, peuvent se trouver soit en phase (HDB⁺ et HDB⁺″ identiques, ainsi que HDB⁻ et HDB⁻″) soit en opposition de phase (HDB⁺ et HDB⁻″ identiques, ainsi que HDB⁻ et HDB⁺″). Ceci résulte du fait que dans ce type de code, l'information est véhiculée par les transitions et non par la valeur absolue du signal. Ceci est évidemment à l'origine de difficultés importantes, lorsque l'on veut, pour commuter des signaux codés en HDB3 sans perdre d'information, détecter leur décalage temporel, difficultés résolues dans le système décrit ici.

Pour ce faire, on forme, en sortie de chaque circuit OU exclusif 160 un signal dont l'allure est indépendante d'un retournement de phase du signal HDB3, origine des signaux HDB⁺ et HDB⁻ appliqué aux entrées de chaque circuit OU exclusif 160. Lorsque les deux signaux R₁ et R₁″ sont sans décalage temporel, les signaux de sortie des circuits OU exclusifs 160 sont identiques et le signal de sortie du circuit OU exclusif 161 est toujours au niveau bas. Le compteur 162 ne compte aucune transition et le signal de sortie COR du comparateur numérique du circuit 162 est au niveau bas. Au contraire, si le décalage temporel entre R₁ et R₁″ n'est pas nul, le compteur comptera de nombreuses transitions et le signal COR sera au niveau haut. Dans ce cas, et si un ordre de commutation OC est présent à l'entrée 123, le circuit de traitement envoie un signal de décalage sur la sortie 124 et laisse inchangés les signaux de commande d'aiguillage A₀ et A₁, sur les sorties 155 et 156 de façon à ce que la sortie du canal normal 1 reste appliquée à la sortie 120.

Lorsque le circuit de traitement 180 détecte l'annulation du décalage temporel par passage au niveau bas du signal COR, il envoie, en présence toujours de l'ordre de commutation OC sur l'entrée 123, des signaux $A_0$ et $A_1$ tels que le multiplexeur 140 applique les signaux HDB$^{+''}$ et HDB$^{-''}$ de la paire d'entrées 143-144 à la paire de sorties 147-148, de façon cependant à appliquer HDB$^{+''}$ en 148 et HDB$^{-''}$ en 147, si $R_1$ et $R_1''$ sont en phase, et l'inverse si $R_1$ et $R_1''$ sont en opposition de phase. Ceci est obtenu grâce aux sorties Ø$^+$ et Ø$^-$ des comparateurs analogiques 171 et 173, respectivement.

En effet Ø$^+$ est au niveau haut si $R_1$ et $R_1''$ sont en phase, et Ø$^-$ est au niveau haut si $R_1$ et $R_1''$ sont en opposition de phase. Les signaux Ø$^+$ et Ø$^-$ appliquée au circuit de traitement 180 permettent à celui-ci de commander, par les signaux $A_0$ et $A_1$, la commutation convenable.

Le circuit de traitement 180, réalisé en logique câblée ou à l'aide d'un microprocesseur, est du type connu, à la portée de l'homme de métier, qui, en réponse aux signaux définis ci-dessus sur ses entrées 123, 181, 182 et 183, élabore les signaux de sortie également définis ci-dessus, sur ses sorties 124, 155 et 156.

Un avantage supplémentaire du système qui vient d'être décrit résulte du fait que les moyens sensibles au décalage temporel traitent des signaux codés selon le code HDB3. Il s'agit du fait que, même au cas où l'information à transmettre est une suite de 0 ou une suite de 1, le décalage temporel peut être détecté, parce que les transitions sont certaines sur le signal codé en code bipolaire HDB3, quelle que soit l'information à transmettre. Ceci n'est pas le cas sur un signal binaire classique, pour lequel le décalage temporel est non détectable dans le cas de transmission d'une suite de 0, ou de 1.

Bien entendu, tout ce qui a été indiqué à propos de la commutation d'un canal normal sur le canal de secours reste vrai à propos de la commutation du canal de secours sur le même canal normal.

La description qui vient d'être faite correspond à un réseau de transmission numérique par faisceau hertziens, mais le système de l'invention peut être utilisé pour divers types de réseau de transmission numérique, par exemple à câbles, à fibres optiques, et tout type de réseau où les signaux d'accès aux canaux de transmission sont du type bipolaire.

**Revendications**

1. Système de commutation pour réseau de transmission numérique à au moins un canal normal (1) comprenant, à l'émission, des moyens (11) pour appliquer à l'entrée d'un canal de secours (8) un signal ($E_1$) appliqué à l'entrée du canal normal, et, à la réception, des moyens de commutation (140) du canal normal (1) sur le canal de secours (8), dans lequel lesdits moyens d'application de signal (11) du côté émission, sont agencés pour émettre des signaux bipolaires, système caractérisé par le fait qu'il comprend, du côté réception, des moyens (313, 131, 132, 150) sensibles au décalage temporel entre le signal bipolaire ($R_1$) du canal normal et le signal bipolaire ($R_1''$) du canal de secours, et des moyens de compensation (10) dudit décalage, agencés pour recevoir un signal bipolaire ($R_1'$), les dits moyens sensibles (313, 131, 132, 150) étant agencés pour commander lesdits moyens de compensation (10), et, lorsque ledit décalage est compensé, lesdits moyens de commutation (140).

2. Système selon la revendication 1, dans lequel lesdits moyens sensibles (313, 131, 132, 150) comprennent à chaque entrée des moyens (113, 213, 313, 132) pour transformer un signal bipolaire en deux signaux binaires et un signal d'horloge, des moyens d'addition logique (160) des deux signaux binaires du canal normal (1), des moyens d'addition logique (160) des deux signaux binaires du canal de secours (8), des moyens (161, 162, 163) pour détecter la coïncidence des deux signaux résultant de ces additions logiques, des moyens (170-173) sensibles au déphasage entre l'un des deux signaux binaires du canal normal (1) et chaque signal binaire du canal de secours (8), lesdits moyens (161-162) de détection de coïncidence et lesdits moyens (170-173) sensibles au déphasage commandant lesdits moyens de commutation (140) du côté réception.

3. Système selon l'une des revendications 1 ou 2, comprenant plusieurs canaux normaux et un système d'aiguillage (9), du côté émission, lesdits moyens de compensation (10) du décalage temporel, du côté réception, étant agencés pour que l'un quelconque des canaux normaux puisse être secouru par le canal de secours (8).

**Claims**

1. Switching system for a digital transmission network having at least one normal channel (1), comprising, on the transmission side, means (11) for applying to the input of an emergency channel (8) a signal ($E_1$) applied to the input of the normal channel and, on the reception side, means for switching (140) from the normal channel (1) to the emergency channel (8), wherein said means for applying the signal (11) on the emission side, are adapted for transmitting bipolar signals, system characterized in that it comprises, on the reception side, means (313, 131, 132, 150), means sensitive to the time shift between the bipolar signal ($R_1$) of the normal channel and the bipolar signal ($R_1''$) of the emergency channel, and means for compensating (10) said shift, adapted for receiving a bipolar signal ($R_1'$), said sensitive means (313, 131, 132, 150) being adapted for controlling said means for compensating (10), and, when said shift is compensated for, said switching means (140).

2. System according to claim 1, wherein said sensitive means (313, 131, 132, 150) comprise at each input means (113, 213, 313, 132) for transforming a bipolar signal into two binary signals and a clock signal, means for the logic addition (160) of the two binary signals of the normal channel (1), means for the logic addition (160) of the two binary signals of the emergency channel (8), means (161, 162, 163) for detecting the coincidence of the two signals resulting from these logic additions, means (170-173) sensitive to the phase-shift between one of the two binary signals of the normal channel (1) and each binary signal of the emergency channel (8), said coincidence detection means (161-162) and said phase-shift sensitive means (170-173) controlling said switching means (140) on the reception side.

3. System according to one of claims 1 or 2 comprising several normal channels and a switching system (9), on the transmission side, and said time shift compensation means (10), on the reception side, are adapted so that any one of the normal channels may be replaced by the emergency channel (8).

**Patentansprüche**

1. Umschaltsystem für ein digitales Übertragungsnetz mit mindestens einem Normalkanal (1), welches sendeseitig Mittel (11) umfaßt, um ein an den Eingang des Normalkanals gelegtes Signal $E_1$ an den Eingang eines Ersatzkanals (8) zu bringen, und empfangsseitig Mittel (140), um vom Normalkanal (1) auf den Ersatzkanal (8) zu schalten, bei welchem die genannten sendeseitigen Mittel zum Anlegen eines Signals (11) für die Abgabe von bipolaren Signalen eingerichtet sind, System dadurch gekennzeichnet, daß es empfangseitig gegen zeitlichen Verschiebung zwischen dem bipolaren Signal ($R_1$) des Normalkanals und dem bipolaren Signal ($R_1''$) des Ersatzkanals empfindliche Mittel (313, 131, 132, 150) und Kompensationsmittel (10) für die genannte Verschiebung, welche für den Empfang eines bipolaren Signals ($R_1'$) ausgebildet sind, enthält, wobei die empfindliche Mittel (313, 131, 132, 150) für die Steuerung der genannten Kompensationsmittel (10) und, wenn die genannte Verschiebung Kompensiert ist, zur Steuerung der genannten Umschaltmittel (140), eingerichtet sind.

2. System gemäß Anspruch 1, bei welchem die empfindliche Mittel (313, 131, 132, 150) an jedem Eingang Mittel (113, 213, 313, 132), um ein bipolares Signals in zwei Binärsignale und ein Taktsignal umzuwandeln, Mittel zur logischen Addition (160) der beiden Binärsignale des Normalkanals (1), Mittel zur logischen Addition (160) der beiden Binärsignale des Ersatzkanals (8), Mittel (161, 162, 163) zum Erfassen der Koinzidenz der beiden aus diesen logischen Additionen resultierenden Signale, gegen Phasenkompensation, zwischen einem der beiden Binärsignale des Normalkanals (1) und jedem Binärsignal des Ersatzkanals (8) empfindliche Mittel (170-173), enthalten, wobei die genannten Koinzidenzerfassungsmittel (161-162) und die gegen Phasenkompensation empfindliche Mittel (170-173) die genannten empfangsseitigen Umschaltmittel (140) steuern.

3. System gemäß einem der Ansprüche 1 oder 2 mit mehreren Normalkanälen und einem sendeseitigen Verteilungssystem (9), wobei die genannten empfangsseitigen Kompensationsmittel für die zeitliche Verschiebung (10) so ausgebildet sind, daß irgendeiner der Normalkanäle durch den Ersatzkanal (8) ersetzt werden kann.

FIG.1

EP 0 187 067 B1

FIG.2

FIG.3

FIG.4

FIG.5

FIG.6